# EUROPÄISCHE PATENTSCHRIFT

(11) **EP 2 396 203 B1**
(45) Veröffentlichungstag und Bekanntmachung des Hinweises auf die Patenterteilung: **23.03.2016**
(21) Anmeldenummer: 09801199.2
(22) Anmeldetag: 14.12.2009
(51) Int. Cl.: B60T 8/48, B60T 13/74

(54) **VERFAHREN ZUM BETRIEB EINER HYDRAULISCHEN, EINE BLOCKIERSCHUTZREGELEINRICHTUNG AUFWEISENDEN FAHRZEUGBREMSANLAGE**
METHOD FOR OPERATING A HYDRAULIC VEHICLE BRAKING SYSTEM INCLUDING AN ANTILOCK CONTROL DEVICE
PROCÉDURE DE COMMANDE D'UN SYSTÈME DE FREINAGE HYDRAULIQUE AVEC DISPOSITIF ANTI-BLOCAGE POUR VÉHICULE AUTOMOBILE

(30) Priorität: 11.02.2009 DE 102009000781
(43) Veröffentlichungstag der Anmeldung: 21.12.2011
(73) Patentinhaber: Robert Bosch GmbH, 70442 Stuttgart (DE)
(72) Erfinder: VOLLERT, Herbert, 71665 Vaihingen/Enz (DE); WEIBERLE, Reinhard, 71665 Vaihingen/Enz (DE); JAHNZ, Timo, 74354 Besigheim (DE); MEHL, Volker, 76356 Weingarten (DE); KNEIP, Frank, Ilsfeld 74360 (DE); KOLARSKY, Jens, 74321 Bietigheim/Bissingen (DE); HOENLE, Stephan, 70825 Korntal-Muenchingen (DE)
(86) Internationale Anmeldenummer: PCT/EP2009/067029
(87) Internationale Veröffentlichungsnummer: WO 2010/091756

(56) Entgegenhaltungen:
- EP-A2- 0 379 329
- EP-A2- 1 964 739
- WO-A1-2004/005095
- DE-A1- 10 327 553
- DE-A1-102007 016 861
- FR-A1- 2 860 474

## Beschreibung

### Stand der Technik

Die Erfindung betrifft ein Verfahren zum Betrieb einer hydraulischen Fahrzeugbremsanlage, die einen Hauptbremszylinder mit einem steuerbaren Bremskraftverstärker aufweist, mit den Merkmalen des Oberbegriffs des Anspruchs 1.

Aus der Offenlegungsschrift DE 103 27 553 A1 ist eine derartige hydraulische Fahrzeugbremsanlage bekannt, die mit Ausnahme des Bremskraftverstärkers herkömmlicher Bauart ist. Die Fahrzeugbremsanlage weist einen Zweikreis-Hauptbremszylinder auf, an den vier Radbremsen, aufgeteilt in zwei Bremskreise, angeschlossen sind. Eine Zweikreis-Fahrzeugbremsanlage ist für die Erfindung ebenso wenig zwingend wie mehrere Radbremsen. Zudem weist die bekannte Fahrzeugbremsanlage eine Radschlupfregeleinrichtung auf, für die Bezeichnungen wie (Brems-) Blockierschutz-, Antriebsschlupf-, Fahrdynamik- und/oder Stabilitätsregeleinrichtung sowie Abkürzungen wie ABS, ASR, FDR, ESP gebräuchlich sind. Der hydraulische Teil der Radschlupfregeleinrichtung umfasst für jede Radbremse ein Bremsdruckaufbauventil und ein Bremsdruckabsenkventil sowie für jeden Bremskreis eine Hydropumpe, ein Trennventil, mit dem der Hauptbremszylinder hydraulisch vom Bremskreis trennbar ist, und ein Ansaugventil, durch das der Hauptbremszylinder zum Zwecke eines schnellen Bremsdruckaufbaus mit einer Saugseite der Hydropumpe verbindbar ist. Solche Radschlupfregeleinrichtungen und ihre Funktionsweise sind an sich bekannt und sollen an dieser Stelle nicht näher erläutert werden.

Anstelle eines Unterdruck-Bremskraftverstärkers weist die bekannte Fahrzeugbremsanlage einen elektromechanischen Bremskraftverstärker mit einem Hohl-wellen-Elektromotor auf, dessen Rotor eine Mutter eines Spindeltriebs aufweist, welcher die rotatorische Antriebsbewegung des Elektromotors in eine translatorische Bewegung zur Betätigung des Hauptbremszylinders umsetzt. Andere Konstruktionen eines elektromechanischen Bremskraftverstärkers sind für die Erfindung möglich, beispielsweise kann der Bremskraftverstärker ein Zahnstangengetriebe evtl. mit einer Schnecke zum Antrieb der Zahnstange, zur Umsetzung der rotatorischen Antriebsbewegung eines Elektromotors in eine translatorische Bewegung zu Betätigung des Hauptbremszylinders aufweisen. Auch ein elektromechanischer Bremskraftverstärker mit einem Linearmotor, einem Elektromagneten oder einem Piezoelement ist für das erfindungsgemäße Verfahren verwendbar. Die Aufzählung ist nicht abschließend.

Die Fahrzeugbremsanlage ist eine Hilfskraft-Bremsanlage, d.h. eine Betätigungskraft zu Betätigung des Hauptbremszylinders wird zum Teil als Muskelkraft von einem Fahrzeugführer aufgebracht und im übrigen als Fremdkraft vom elektromechanischen Bremskraftverstärker. Denkbar ist auch ein Betrieb als Fremdkraftbremsanlage, bei der die Betätigungskraft ausschließlich als Fremdkraft vom Bremskraftverstärker erzeugt wird und eine von einem Fahrzeugführer zur Bremsbetätigung ausgeübte Muskelkraft oder auch ein vom Fahrzeugführer ausgeführter Betätigungsweg als Sollgröße zur Steuerung oder Regelung der als Fremdkraft bezeichneten Kraft des Bremskraftverstärkers dient.

Die französische Patentanmeldung FR 2 860 474 A1 offenbart ein Verfahren zum Betrieb einer hydraulischen Fahrzeugbremsanlage, deren Hauptbremszylinder einen angeflanschten, elektromechanischen Bremskraftverstärker und die eine Blockierschutzregeleinrichtung aufweist. Im Falle einer Blockierschutzregelung sieht die französische Anmeldung eine Verringerung der Fremdkraft des Bremskraftverstärkers vor, so dass bei unveränderter Muskelkraft auf ein Fußbremspedal ein Bremsdruck im Hauptbremszylinder reduziert wird. Der reduzierte Bremsdruck genügt zum Bremsen auf einer rutschigen Oberfläche, die Reduzierung des Hauptbremszylinderdrucks entlastet Ventile und eine Hydropumpe der Blockierschutzregeleinrichtung während der Blockierschutzregelung.

### Offenbarung der Erfindung

Das erfindungsgemäße Verfahren mit den Merkmalen den Anspruchs 1 sieht vor, während einer Blockierschutzregelung eine hier als Fremdkraft bezeichnete Kraft des Bremskraftverstärkers zu verringern. Das erfindungsgemäße Verfahren ist während einer (Brems-) Blockierschutzregelung aller Radbremsen der Fahrzeugbremsanlage anwendbar. Bei einer Blockierschutzregelung wird üblicherweise der Radbremsdruck in den Radbremsen der geregelten Fahrzeugräder durch Öffnen des Bremsdruckabsenkventils abgesenkt. Das Absenken des Radbremsdrucks kann auch durch eine Modulation der Radbremsdrücke mit den Bremsdruckaufbau- und -absenkventilen erfolgen. Jedenfalls dann, wenn der Radbremsdruck in allen Radbremsen abgesenkt wird, ist es nicht notwendig, im Hauptbremszylinder den höheren Betriebsbremsdruck aufrecht zu erhalten, der vor Beginn der Blockierschutzregelung geherrscht hat oder einen Bremsdruck mit dem Hauptbremszylinder aufzubauen, der ohne die Blockierschutzregelung herrschen würde. Die Verringerung der Fremdkraft des Bremskraftver- stärkers erfolgt insbesondere durch eine Reduzierung der Verstärkung des Bremskraftverstärkers. Durch das erfindungsgemäße Verfahren wird die Stromaufnahme eines elektromechanischen Bremskraftverstärkers und damit dessen thermische Belastung sowie eine Strombelastung eines elektrischen Bordnetzes eines mit der Fahrzeugbremsanlage ausgerüsteten Fahrzeugs verringert. Mit der Verringerung der Fremdkraft des Bremskraftverstärkers und damit des Hauptbremszylinderdrucks wird die Förderleistung einer üblicherweise als Rückförderpumpe bezeichneten Hydropumpe der Radschlupfregeleinrichtung verringert, weil sie gegen den verringerten Hauptbremszylinderdruck fördert. Die Verringerung des Hauptbremszylinderdrucks und damit des Druckniveaus der Fahrzeugbremsanlage insgesamt verringert auch die Belastung der übrigen hydraulischen Komponenten, beispielsweise der Magnetventile der Radschlupfregeleinrichtung, was sich positiv auf deren Lebensdauer auswirkt. Auch die Geräuschentwicklung der Radschlupfregeleinrichtung während einer Blockierschutzregelung ist durch die Absenkung des Druckniveaus verringert. Die Fremdkraft kann kontinuierlich oder periodisch verringert werden.

Die Unteransprüche haben vorteilhafte Ausgestaltungen und Weiterbildungen der im Anspruch 1 angegebenen Erfindung zu Gegenstand.

Grundsätzlich ist das erfindungsgemäße Verfahren für alle, eine Radschlupfregeleinrichtung oder zumindest eine (Brems-) Blockierschutzregeleinrichtung aufweisenden, hydraulischen Fahrzeugbremsanlagen, deren Hauptbremszylinder einen steuerbaren Bremskraftverstärker aufweist, anwendbar. Steuerbar bedeutet, dass die Fremdkraft des Bremskraftverstärkers nicht ausschließlich von der Muskelkraftbetätigung durch einen Fahrzeugführer gesteuert wird, sondern dass die Fremdkraft zusätzlich beispielsweise mit einem Steuergerät steuer- oder regelbar ist. Bei einem Unterdruck-Bremskraftverstärker ist eine Steuerung der Fremdkraft beispielsweise mit einem Magnetventil möglich, mit dem die Unterdruckkammer des Bremskraftverstärkers belüftbar ist. Mit dem Magnetventil wird, steuer oder regelbar, in der Unterdruckkammer eines Unterdruck-Bremskraftverstärkers ein Gegendruck zum Druck in der Arbeitskammer aufgebaut, die, üblicherweise durch ein Servoventil, belüftet wird, das von der Muskelkraftbetätigung des Bremskraftverstärkers gesteuert wird. Vorzugsweise sieht die Erfindung einen elektromechanischen Bremskraftverstärker vor, dessen Fremdkraft elektrisch gesteuert bzw. geregelt wird (Anspruch 2).

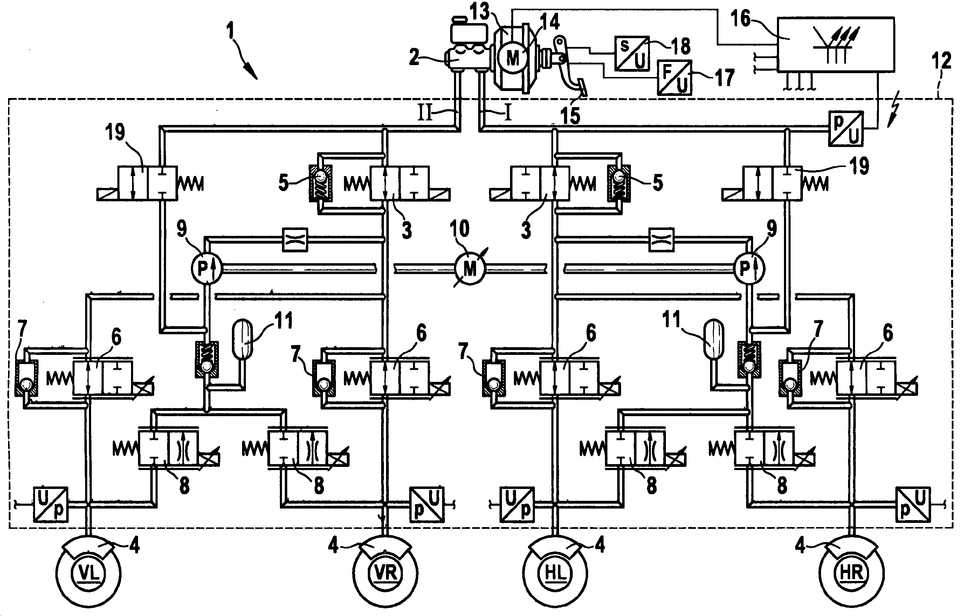

### Kurze Beschreibung der Zeichnung

Die Erfindung wird nachfolgend anhand der Zeichnung näher erläutert. Die einzige Figur zeigt einen hydraulischen Schaltplan einer hydraulischen Fahrzeugbremsanlage zur Durchführung des erfindungsgemäßen Verfahrens.

### Ausführungsform der Erfindung

Die in der Zeichnung dargestellte hydraulische Fahrzeugbremsanlage 1 weist eine Radschlupfregeleinrichtung 12 (Blockierschutzregelung ABS; Antriebsschlupfregelung ASR; Fahrdynamikregelung FDR, ESP) auf. Sie ist als Zweikreisbremsanlage mit zwei Bremskreisen I, II ausgebildet, die an einen Hauptbremszylinder 2 angeschlossen sind. Jeder Bremskreis I, II ist über ein Trennventil 3 an den Hauptbremszylinder 2 angeschlossen. Die Trennventile 3 sind in ihrer stromlosen Grundstellung offene 2/2-Wege-Magnetventile. Den Trennventilen 3 ist jeweils ein vom Hauptbremszylinder 2 zu Radbremsen 4 durchströmbares Rückschlagventil 5 hydraulisch parallel geschaltet. An das Trennventil 3 jedes Bremskreis I, II sind die Radbremsen 4 über Bremsdruckaufbauventile 6 angeschlossen. Die Bremsdruckaufbauventile 6 sind in ihrer stromlosen Grundstellung offene 2/2-Wege-Magnetventile. Ihnen sind Rückschlagventile 7 parallel geschaltet, die von den Radbremsen 4 in Richtung zum Hauptbremszylinder 2 durchströmbar sind.

An jede Radbremse 4 ist ein Bremsdruckabsenkventil 8 angeschlossen, die gemeinsam an eine Saugseite einer Hydropumpe 9 angeschlossen sind. Die Bremsdruckabsenkventile 8 sind als in ihrer stromlosen Grundstellung geschlossene 2/2-Wege-Magnetventile ausgebildet. Eine Druckseite der Hydropumpe 9 ist zwischen den Bremsdruckaufbauventilen 6 und den Trennventilen 3 angeschlossen, d. h. die Druckseite der Hydropumpe 9 ist über die Bremsdruckaufbauventile 6 mit den Radbremsen 4 und über das Trennventil 3 mit dem Hauptbremszylinder 2 verbunden. Die Bremsdruckaufbauventile 6 und die Bremsdruckabsenkventile 8 sind wegen der besseren Steuer- und Regelbarkeit Proportionalventile. Die Hydropumpen 9 werden vielfach als Rückförderpumpen bezeichnet.

Jeder der beiden Bremskreise I, II weist eine Hydropumpe 9 auf, die gemeinsam mit einem Elektromotor 10 antreibbar sind. Die Saugseiten der Hydropumpen 9 sind an die Bremsdruckabsenkventile 8 angeschlossen. Auf der Saugseite der Hydropumpen 9 sind Hydrospeicher 11 zur Aufnahme und Zwischenspeicherung von Bremsflüssigkeit vorhanden, die durch Öffnen der Bremsdruckabsenkventile 8 während einer Radschlupfregelung aus den Radbremsen 4 ausströmt.

Die Bremsdruckaufbauventile 6 und die Bremsdruckabsenkventile 8 bilden Radbremsdruckmodulationsventilanordnungen, mit denen bei angetriebener Hydropumpe 9 eine radindividuelle Bremsdruckregelung zur Radschlupfregelung in an sich bekannter und hier nicht zu erläuternder Weise möglich ist. Die Trennventile 3 werden bei einer Radschlupfregelung jedenfalls dann geschlossen, d.h. die Fahrzeugbremsanlage 1 wird hydraulisch vom Hauptbremszylinder 2 getrennt, wenn der Hauptbremszylinder 2 nicht betätigt ist, um einen hydraulischen Druck zur Betätigung der Radbremsen 4 mit den Hydropumpen 9 aufbauen zu können. Bei einer (Brems-) Blockierschutzregelung, bei der der Hauptbremszylinder 2 normalerweise betätigt ist und ein hydraulischer Druck in der Fahrzeugbremsanlage 1 herrscht, bleiben die Trennventile 3 normalerweise offen.

Durch ein Ansaugventil 19 in jedem Bremskreis I, II ist die Saugseite der Hydropumpe 9 mit dem Hauptbremszylinder 2 verbindbar. Die Ansaugventile 19 sind in ihrer stromlosen Grundstellung geschlossene 2/2-Wege-Magnetventile. Werden Sie geöffnet, saugt die Hydropumpe 9 Bremsflüssigkeit unmittelbar aus dem Hauptbremszylinder 2, wodurch bei unbetätigtem Hauptbremszylinder 2 bzw. druckloser Fahrzeugbremsanlage 1 ein schnellerer Bremsdruckaufbau mit der Hydropumpe 9 möglich ist.

Der Hauptbremszylinder 2 weist einen elektromechanischen Bremskraftverstärker 13 auf, der mit Hilfe eines Elektromotors 14 eine hier als Fremdkraft bezeichnete Kraft erzeugt, die zusammen mit einer Muskelkraft, die über das Bremspedal 15 aufgebracht wird, den Hauptbremszylinder 2 betätigt. Der symbolisch dargestellte Elektromotor 14 ist in den Bremskraftverstärker 13 integriert. Der Elektromotor 14 kann ein rotatorischer Motor sein, dessen Drehbewegung über ein Getriebe untersetzt und in eine translatorische Bewegung zur Betätigung des Hauptbremszylinders 2 gewandelt wird. Es ist auch eine Ausführung des Bremskraftverstärkers 13 mit einem Elektro-Linearmotor oder einem Elektromagneten möglich. Die Aufzählung ist nicht abschließend.

Zur Steuerung oder Regelung der Fahrzeugbremsanlage 1 einschließlich des Bremskraftverstärkers 13 ist ein elektronisches Steuergerät 16 vorhanden. Mit einem Kraftsensor 17 ist eine auf das Bremspedal 15 ausgeübte Pedalkraft und mit einem Wegsensor 18 eine Stellung des Bremspedals 15 messbar.

Erfindungsgemäß wird die Fremdkraft, die der Bremskraftverstärker 13 auf den Hauptbremszylinder 2 ausübt, während einer Blockierschutzregelung (ABS) verringert. Eine Kraftverstärkung des Bremskraftverstärkers 13 wird reduziert. Nach Beendigung der Blockierschutzregelung wird der Bremskraftverstärker 13 wieder wie vorgesehen gesteuert bzw. geregelt. Das erfindungsgemäße Verfahren wird während einer (Brems-) Blockierschutzregelung angewendet, wenn bei einer Betätigung der Fahrzeugbremsanlage 1 die Fahrzeugräder zum Blockieren neigen, insbesondere, wenn alle gebremsten Fahrzeugräder bei einer Bremsbetätigung zum Blockieren neigen und schlupfgeregelt werden.

Werden die Trennventile 3 zu einer Blockierschutzregelung geschlossen, kann die Fremdkraft des Bremskraftverstärkers 13 stark und sogar bis auf null verringert werden. Auch ist eine Verringerung der Fremdkraft des Bremskraftverstärkers 13 bei einer Blockierschutzregelung auf einen Erfahrungswert möglich, also auf einen vorgegebenen oder vorgebbaren Wert, der üblicherweise zur Bremsbetätigung bei einer Blockierschutzregelung ausreicht. Auch kann der Bremskraftverstärker 13 während einer Blockierschutzregelung so gesteuert bzw. geregelt werden, dass ein Hauptbremszylinderdruck im Hauptbremszylinder 2 mindestens so groß ist, wie der höchste Radbremsdruck in den Radbremsen 4. Ein höherer Druck ist im Hauptbremszylinder 2 nicht notwendig. Es kann auch vorsorglich ein um einen Faktor oder einen bestimmten Wert höherer Hauptbremszylinderdruck durch Steuerung bzw. Regelung des Bremskraftverstärkers 13 eingestellt werden. Eine weitere Möglichkeit ist eine Steuerung bzw. Regelung des Bremskraftverstärkers 13 während einer Blockierschutzregelung so, dass der Hauptbremszylinderdruck im Hauptbremszylinder 2 nicht kleiner als ein Blockierdruck in den Radbremsen 4 ist. Der Blockierdruck ist der Druck, der zum Blockieren der gebremsten Fahrzeugräder ausreicht. Auch hier kann ein um einen Faktor oder einen bestimmten Wert höherer Hauptbremszylinderdruck gesteuert bzw. geregelt werden.

Werden während einer Blockierschutzregelung die Hydropumpen 9 betrieben, erhöht ihr Förderdruck, vorausgesetzt die Trennventile 3 sind offen, den Hauptbremszylinderdruck und/oder das von den Rückförderpumpen 9 in den Hauptbremszylinder 2 geförderte Bremsflüssigkeitsvolumen bewegt das Bremspedal 15 zurück. In jedem Fall bekommt ein Fahrzeugführer über das Bremspedal 15 eine Rückmeldung, die er normalerweise als störend empfinden wird und die ihn verunsichern kann. Deswegen sieht eine Ausgestaltung des erfindungsgemäßen Verfahrens vor, den Bremskraftverstärker 13 auf seine Stellung, d.h. die Verschiebung des oder der Hauptbremszylinderkolben, zu steuern oder zu regeln. Die Steuerung bzw. Regelung kann in der Weise erfolgen, dass die Stellung des betätigten Bremskraftverstärkers 13 unverändert bleibt oder es ist eine Steuerung bzw. Regelung beispielsweise in Abhängigkeit vom Wegsensor 18 und/oder vom Kraftsensor 17 möglich. Eine weitere Möglichkeit ist eine Momentenregelung des Elektromotors 14 des Bremskraftverstärkers 13. Allgemein kann von einer Regelung oder Steuerung einer Kenngröße des Bremskraftverstärkers 13 gesprochen werden, wobei die gewählte Kenngröße einen zumindest teilweisen Ausgleich der Wirkung des Förderdrucks der Hydropumpen 9 auf den Hauptbremszylinder 2 ermöglichen muss. Die Kraftverstärkung des Bremskraftverstärkers 13 wird bei den erläuterten Regelungen bzw. Steuerungen erhöht, damit sich die vom Fahrzeugführer auf das Bremspedal 15 ausgeübte Muskelkraft nicht durch den Förderdruck der Hydropumpen 9 ändert, wenn diese während einer Blockierschutzregelung betrieben werden.

Die erfindungsgemäße Strategie ist, den Hauptbremszylinderdruck im Hauptbremszylinder 2 durch eine Erhöhung der Fremdkraft des Bremskraftverstärkers 13 zu erhöhen, ohne die auf das Bremspedal 15 ausgeübte Muskelkraft zu vergrößern. Anders ausgedrückt: Der während einer Blockierschutzregelung durch Verringerung der Fremdkraft des Bremskraftverstärkers 13 abgesenkte Hauptbremszylinderdruck wird erhöht, wenn die Hydropumpen 9 betrieben werden. Die Fremdkraft des Bremskraftverstärkers 13 bleibt aber niedriger als sie es bei der gegebenen Bremsbetätigung ohne die Blockierschutzregelung wäre. Der Förderdruck der Hydropumpen 9, der den Hauptbremszylinderdruck erhöht, wird zumindest teilweise kompensiert durch Erhöhung der Fremdkraft des Bremskraftverstärkes 13, insbesondere durch Erhöhung seine Kraftverstärkung. Trotzdem bleibt der Hauptbremszylinderdruck niedriger als er ohne die Blockierschutzregelung wäre. Zur Erläuterung und zum Verständnis dieser Strategie kann der Förderdruck der Hydropumpen 9 als Störgröße im regelungstechnischen Sinn angesehen werden, die den Hauptbremszylinderdruck ändert, insbesondere erhöht. Die Fremdkraft des Bremskraftverstärkers 13, also seine Kraftverstärkung, werden erhöht, um den Förderdruck der Hydropumpen 9 zumindest teilweise auszugleichen. Es wird also der Hauptbremszylinderdruck beispielsweise um einen Erfahrungswert erhöht und durch Steuerung bzw. Regelung des Bremskraftverstärkers 13 dieser erhöhte Hauptbremszylinderdruck während des Betriebs der Hydropumpen 9 während einer Blockierschutzregelung gehalten. Dadurch wird die Rückwirkung der Hydropumpen 9 auf den Hauptbremszylinder 2 und über diesen auf das Bremspedal 15 zumindest teilweise ausgeglichen.

## Patentansprüche

1. Verfahren zum Betrieb einer hydraulischen, eine Blockierschutzregeleinrichtung (12) aufweisenden Fahrzeugbremsanlage (1), die einen Hauptbremszylinder (2) mit einem steuerbaren Bremskraftverstärker (13), mindestens eine Radbremse (4), die über ein Bremsdruckaufbauventil (6) an den Hauptbremszylinder (2) angeschlossen ist, ein Bremsdruckabsenkventil (8), durch das ein Radbremsdruck der mindestens einen Radbremsen (4) absenkbar ist, und eine Hydropumpe (9), deren Saugseite an das Bremsdruckabsenkventil (8) und deren Druckseite zwischen dem Bremsdruckaufbauventil (6) und dem Hauptbremszylinder (2) angeschlossen ist, aufweist, wobei während einer Blockierschutzregelung eine Fremdkraft des Bremskraftverstärkers (13) verringert wird, **dadurch gekennzeichnet, dass**, wenn während einer Blockierschutzregelung die Hydropumpe (9) betrieben wird, eine Fremdkraft des Bremskraftverstärkers (13) in Abhängigkeit von einer Druckdifferenz zwischen der Druckseite und der Saugseite der Hydropumpe (9) erhöht wird.

2. Verfahren nach Anspruch 1, **dadurch gekennzeichnet, dass** die Fahrzeugbremsanlage (1) einen elektromechanischen Bremskraftverstärker (13) aufweist.

3. Verfahren nach Anspruch 1, **dadurch gekennzeichnet, dass** während einer Blockierschutzregelung die Fremdkraft des Bremskraftverstärkers (13) in Abhängigkeit von Radbremsdrücken in den Radbremsen (4) der Fahrzeugbremsanlage (1) so geregelt wird, dass ein Hauptbremszylinderdruck nicht kleiner als ein höchster Radbremsdruck in den Radbremsen (4) ist.

4. Verfahren nach Anspruch 1, **dadurch gekennzeichnet, dass** während einer Blockierschutzregelung die Fremdkraft des Bremskraftverstärkers (13) in Abhängigkeit von einem Blockierdruck, bei dem Fahrzeugräder blockieren, so geregelt wird, dass der Hauptbremszylinderdruck nicht kleiner als der Blockierdruck ist.

5. Verfahren nach Anspruch 1, **dadurch gekennzeichnet, dass** wenn während einer Blockierschutzregelung die Hydropumpe (9) betrieben wird, eine Kenngröße des Bremskraftverstärkers (13) gesteuert bzw. geregelt wird.

6. Verfahren nach Anspruch 5, **dadurch gekennzeichnet, dass** eine Stellung des Bremskraftverstärkers (13) oder ein Moment eines Elektromotors (14) des Bremskraftverstärkers (13) geregelt bzw. gesteuert wird.

## Claims

1. Method for operating a hydraulic vehicle brake system (1) which has an anti-lock control device (12) and a master brake cylinder (2) with a controllable brake booster (13), at least one wheel brake (4), which is connected to the master brake cylinder (2) via a brake pressure-increasing valve (6), a brake pressure-decreasing valve (8) by which a wheel brake pressure of the at least one wheel brake (4) can be decreased, and a hydraulic pump (9) whose suction side is connected to the brake pressure-decreasing valve (8) and whose pressure side is connected between the brake pressure-increasing valve (6) and the master brake cylinder (2), and wherein during an anti-lock control operation, an extraneous force of the brake booster (13) is reduced, **characterized in that** if the hydraulic pump (9) is operated during an anti-lock control operation, an extraneous force of the brake booster (13) is increased as a function of a pressure difference between the pressure side and the suction side of the hydraulic pump (9).

2. Method according to Claim 1, **characterized in that** the vehicle brake system (1) has an electromechanical brake booster (13).

3. Method according to Claim 1, **characterized in that** during an anti-lock control operation the extraneous force of the brake booster (13) is regulated as a function of wheel brake pressures in the wheel brakes (4) of the vehicle brake system (1) in such a way that a master brake cylinder pressure is not lower than a maximum wheel brake pressure in the wheel brakes (4).

4. Method according to Claim 1, **characterized in that** during an anti-lock control operation the extraneous force of the brake booster (13) is regulated as a function of a locking pressure at which vehicle wheels lock, in such a way that the master brake cylinder pressure is not lower than the locking pressure.

5. Method according to Claim 1, **characterized in that** if the hydraulic pump (a) is operated during an anti-lock control operation, a characteristic variable of the brake booster (13)is subjected to open-loop or closed-loop control.

6. Method according to Claim 5, **characterized in that** a position of the brake booster (13) or a torque of an electric motor (14) of the brake booster (13) is subjected to open-loop or closed-loop control.

## Revendications

1. Procédé pour faire fonctionner une installation hydraulique de freinage de véhicule (1) présentant un système de réglage de protection d'antiblocage (12), laquelle présente un cylindre de freinage principal (2) avec un servofrein commandable (13), au moins un frein de roue (4) qui est raccordé par le biais d'une soupape d'augmentation de la pression de freinage (6) au cylindre de freinage principal (2), une soupape d'abaissement de la pression de freinage (8) par le biais de laquelle une pression de frein de roue de l'au moins un frein de roue (4) peut être abaissée, et une pompe hydraulique (9), dont le côté d'aspiration est raccordé à la soupape d'abaissement de la pression de freinage (8) et dont le côté de pression est raccordé entre la soupape d'augmentation de la pression de freinage (6) et le cylindre de freinage principal (2), une force d'assistance du servofrein (13) étant réduite pendant un réglage de protection d'antiblocage, **caractérisé en ce que**, lorsque la pompe hydraulique (9) est entraînée pendant un réglage de protection d'antiblocage, une force d'assistance du servofrein (13) est augmentée en fonction d'une différence de pression entre le côté de pression et le côté d'aspiration de la pompe hydraulique (9).

2. Procédé selon la revendication 1, **caractérisé en ce que** l'installation de freinage de véhicule (1) présente un servofrein électromécanique (13).

3. Procédé selon la revendication 1, **caractérisé en ce que** pendant un réglage de protection d'antiblocage, la force d'assistance du servofrein (13) est régulée en fonction de pressions de freins de roues dans les freins de roue (4) de l'installation de freinage de véhicule (1), de telle sorte qu'une pression de cylindre de freinage principal ne soit pas inférieure à une pression de frein de roue maximale dans les freins de roue (4).

4. Procédé selon la revendication 1, **caractérisé en ce que** pendant un réglage de protection d'antiblocage, la force d'assistance du servofrein (13) est réglée en fonction d'une pression de blocage à laquelle les roues du véhicule se bloquent, de telle sorte que la pression de cylindre de freinage principal ne soit pas inférieure à la pression de blocage.

5. Procédé selon la revendication 1, **caractérisé en ce que** lorsque la pompe hydraulique (9) est entraînée pendant un réglage de protection d'antiblocage, une grandeur caractéristique du servofrein (13) est commandée ou régulée.

6. Procédé selon la revendication 5, **caractérisé en ce qu'**une position du servofrein (13) ou un couple d'un moteur électrique (14) du servofrein (13) est régulé(e) ou commandé(e).
